# DEMANDE DE BREVET EUROPEEN

(11) **EP 2 189 332 A2**
(43) Date de publication de la demande: **26.05.2010**
(21) Numéro de dépôt: 08163798.5
(22) Date de dépôt: 05.09.2008
(51) Int. Cl.: B60Q 1/26

(54) **Procédé de pilotage de sources lumineuses disposées au niveau de poignées extérieures d'un véhicule automobile**

(30) Priorité: 11.09.2007 FR 0706366
(71) Demandeur: Valeo Securité Habitacle, 94042 Créteil Cedex (FR)
(72) Inventeur: Aubry, Anthony, 94042, CRETEIL (FR); Bocage, Frédéric, 94042, CRETEIL (FR)
(74) Mandataire: Jacquot, Ludovic R. G.

(57) **Abrégé**

La présente invention se rapporte à un procédé de pilotage de sources lumineuses disposées au niveau de poignées extérieures d'un véhicule automobile caractérisé en ce qu'il comporte les différentes étapes consistant à : - allumer (103) lesdites sources lumineuses suite à la détection d'un événement particulier (101) ; - provoquer (102) l'extinction des sources lumineuses si les conditions primaires suivantes sont réunies : - sortie d'un identifiant associé au véhicule en dehors d'une zone de détection ; - détection (117) d'un état verrouillé du véhicule.

## Description

La présente invention a pour objet un procédé de pilotage de sources lumineuses disposées au niveau de poignées extérieures d'un véhicule automobile. L'invention a essentiellement pour but de donner une information, à un utilisateur, relative à un état de verrouillage ou de déverrouillage de son véhicule.

Le domaine de l'invention est, d'une façon générale, celui des dispositifs dits de confort d'utilisation des véhicules automobiles, destinés à faciliter, pour un utilisateur, différentes interventions qu'il effectue sur son véhicule. Parmi ces dispositifs, on connait par exemple des dispositifs de condamnation centralisée des portières et du coffre, des dispositifs de fermeture électrique des vitres, ou encore des dispositifs de fermeture automatique d'ouvrants, par exemple de portes ou de coffre.

On connait également désormais des systèmes d'éclairage, dont les sources lumineuses sont disposées au niveau d'au moins une des poignées extérieures de portière du véhicule ; de tels systèmes d'éclairage sont destinés à faciliter à l'utilisateur l'accès à, et la manipulation de, la poignée d'ouverture de la portière équipée.

De manière connue, de tels systèmes d'éclairage ont un mode de pilotage, pour déterminer quand les sources lumineuses sont allumées ou éteintes, qui répond aux types de fonctionnement suivant :
- un premier type de fonctionnement concerne les systèmes dans lesquels une télécommande est utilisée. De tels systèmes sont dits systèmes RKE (pour Remote Key System en langue anglaise). Eventuellement, la télécommande est intégrée dans un dispositif de type identifiant. Dans ce type de fonctionnement, l'éclairage des poignées extérieures équipées de sources lumineuses est activé lorsqu'un bouton de la télécommande, déclenchant le déverrouillage, est pressé. L'éclairage est arrêté lorsqu'un bouton de la télécommande déclenchant le verrouillage est pressé.
- un deuxième type de fonctionnement concerne les systèmes dans lesquels on utilise directement la détection d'un dispositif de type identifiant. De tels systèmes sont dits systèmes HFS (pour Handfree System en langue anglaise). De tels identifiants sont essentiellement destinés à permettre à un véhicule de réaliser une opération de reconnaissance : tout porteur de l'identifiant, et éventuellement uniquement le porteur de l'identifiant, est en mesure de provoquer un déverrouillage automatique des portières du véhicule par sa seule présence dans une zone de détection proche du véhicule considéré.
Dans le deuxième type de fonctionnement, quand le badge est présent dans la zone de détection, l'éclairage des poignées extérieures équipées de sources lumineuses est activé. Lorsque le badge sort de la zone de détection, l'éclairage des poignées extérieures équipées de sources lumineuses est arrêté.

Les inconvénients de ces types de fonctionnement sont les suivants :
- les deux systèmes décrits sont pilotés de manière séparées ;
- aucun retour d'information sous forme lumineuse sur l'état verrouillé/déverrouillé du véhicule n'est réellement disponible, notamment lorsque l'opération de verrouillage est réalisé au niveau de la poignée, par exemple par un appui sur une zone spécifique de la poignée. En effet, seuls les clignotants apportent parfois une information de type lumineuse pour signaler une opération de verrouillage du véhicule. Mais lorsque le verrouillage est effectué au niveau de la poignée, ces clignotants ne sont pas visibles car l'utilisateur est à proximité immédiate - quelques centimètres- de la porte du véhicule. Le seul retour d'information dont on dispose dans un tel cas est une information sonore relative au bruit de verrouillage. Mais ce bruit est destiné à disparaître du fait de l'apparition, et de l'utilisation qui se généralisera, des serrures électriques, connues sous l'appellation e-latch : de telles serrures ne disposeront plus d'actionneur de verrouillage. Par ailleurs, ce bruit existant aujourd'hui n'est pas forcément audible pour les personnes malentendantes.

L'objet de l'invention propose une solution aux problèmes qui viennent d'être mentionnés. Dans l'invention, on utilise les sources lumineuses présentes au niveau des poignées extérieures du véhicule pour fournir à un utilisateur une information de retour visuel sur l'état verrouillé/déverrouillé du véhicule. Le procédé de pilotage proposé est particulièrement utile dans le cas où un utilisateur sort de la zone de détection de l'identifiant sans avoir verrouillé son véhicule : dans un tel cas, on prévoit, dans l'invention, de laisser allumées les sources lumineuses présentes au niveau des poignées extérieures.

L'invention concerne donc essentiellement un procédé de pilotage de sources lumineuses disposées au niveau de poignées extérieures d'un véhicule automobile, procédé comportant les différentes étapes consistant à :
- allumer lesdites sources lumineuses suite à la détection d'un événement particulier ;
- provoquer l'extinction des sources lumineuses si les conditions primaires suivantes sont réunies :

- sortie d'un identifiant associé au véhicule en dehors d'une zone de détection ;
- détection d'un état verrouillé du véhicule.

Outre les caractéristiques principales qui viennent d'être mentionnées dans le paragraphe précédent, le procédé selon l'invention peut présenter une ou plusieurs caractéristiques supplémentaires parmi les suivantes :
- le procédé comporte l'étape supplémentaire consistant à, suite à l'étape d'allumage des sources lumineuses, provoquer l'extinction forcée des sources lumineuses si, à l'issue d'un premier compte à rebours, aucune opération de déverrouillage d'au moins une porte n'a été effectuée. ; par extinction forcée, on désigne une extinction des sources lumineuses réalisée même si une des conditions, ou aucune des conditions, primaires n'est pas observée.
- le premier compte à rebours a une durée comprise entre 10 et 20 secondes, notamment 15 secondes ;
- le procédé comporte l'étape supplémentaire consistant à, suite à l'étape d'allumage des sources lumineuses, provoquer l'extinction forcée des sources lumineuses si un état actif du moteur est détecté ;
- le procédé comporte l'étape supplémentaire consistant à, suite à l'étape d'allumage des sources lumineuses, provoquer l'extinction forcée des sources lumineuses si, à l'issue d'un deuxième compte à rebours, aucune opération d'ouverture de porte n'a été détectée ;
- le deuxième compte à rebours a une durée comprise entre 20 et 40 secondes, notamment 30 secondes ;
- l'événement particulier provoquant l'allumage des sources lumineuses consiste en la détection dans la zone de détection de la présence de l'identifiant associé au véhicule.

La présente invention se rapporte également à un véhicule automobile apte à mettre en oeuvre le procédé selon l'invention.

L'invention et ses différentes applications seront mieux comprises à la lecture de la description qui suit et à l'examen des figures qui l'accompagnent.

Celles-ci ne sont présentées qu'à titre indicatif et nullement limitatif de l'invention. Les figures montrent :

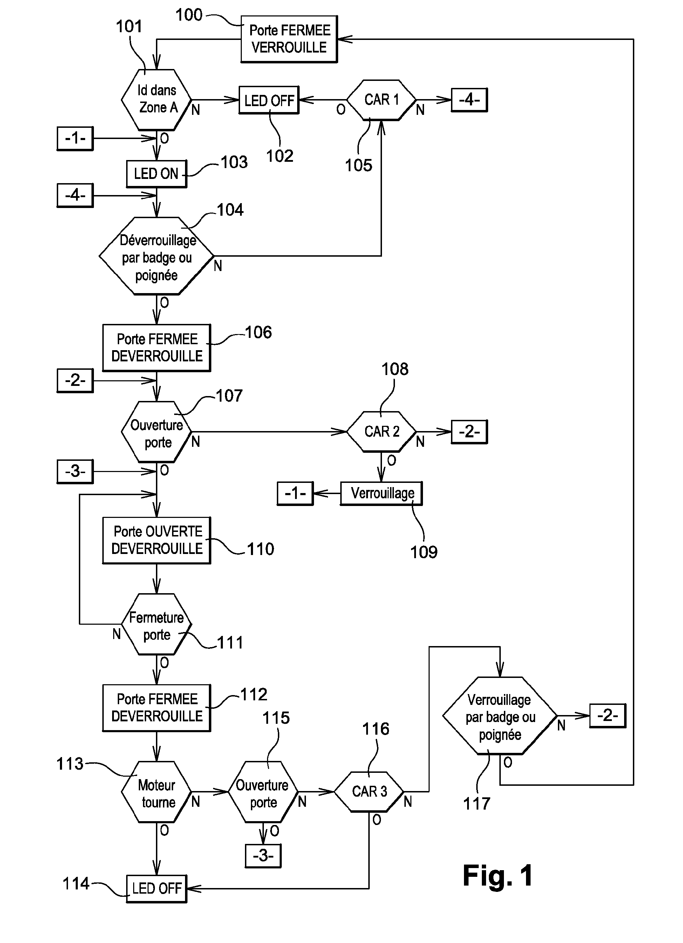

- à la figure 1, un organigramme illustrant un exemple de mise en oeuvre du procédé selon l'invention.
   La figure 1 montre un organigramme illustrant un exemple de procédé de pilotage, selon l'invention, de sources lumineuses présentes au niveau de poignées extérieures de portières de véhicule automobile.
   Dans l'organigramme représenté, une situation initiale 100 correspond à un état fermé et verrouillé d'une porte de véhicule automobile. La source lumineuse associée à la porte considérée n'est, dans cette situation initiale, pas allumée.
   Dans une étape de décision suivante 101, on procède à la détection de l'identifiant du véhicule dans la zone de détection du véhicule. En cas d'absence d'identifiant, la source lumineuse est maintenue éteinte, comme illustré dans une étape 102. Dans le cas contraire, on procède, dans une étape 103 suivante, à l'allumage de la source lumineuse.
   Si la source lumineuse a été allumée, on passe alors à une étape de décision suivante 104, dans laquelle on attend une opération de déverrouillage de la porte, au moyen de l'identifiant ou par une pression au niveau de la poignée. Tant qu'une telle opération n'est pas détectée, on s'intéresse, dans une étape de décision 105, à un premier compte à rebours CAR1, réglé sur une durée d'environ 15 secondes à partir de l'allumage de la source lumineuse dans l'étape 102. Si le premier compte à rebours arrive à son terme, on procède à l'extinction de la source lumineuse matérialisée par l'étape 102. Tant que le premier compte à rebours CAR1 n'est pas arrivé à son terme, l'organigramme demeure en attente d'un événement - déverrouillage ou fin du premier compte à rebours.
   Si une opération de déverrouillage est détectée, on arrive à un état 106 résidant dans le fait que la porte est fermée et déverrouillée. On passe alors à une étape de décision suivante 107 dans laquelle on cherche à détecter une opération d'ouverture de la porte. Tant qu'une telle opération n'est pas détectée, on s'intéresse, dans une étape de décision 108, à un deuxième compte à rebours CAR2, réglé sur une durée d'environ 30 secondes à partir de la détection de l'état 106. Si le deuxième compte à rebours CAR2 arrive à son terme, on procède, dans une étape 109, au verrouillage automatique de la porte. L'organigramme est alors repris au niveau de l'étape 103. Tant que le deuxième compte à rebours CAR2 n'est pas arrivé à son terme, l'organigramme demeure en attente d'un événement
- ouverture de porte ou fin du deuxième compte à rebours.

Si une opération d'ouverture de porte est détectée, on arrive à un état 910 résidant dans le fait que la porte est ouverte et déverrouillée. On passe alors à une étape de décision suivante 111 dans laquelle on cherche à détecter une opération de fermeture de la porte. Tant qu'une telle opération n'est pas détectée, on reste dans l'état 110. Dès que l'opération de fermeture de porte est détectée, la porte se trouve dans un état 112, correspondant à une situation fermée et déverrouillée.

Une étape de décision 113 intervient alors dans laquelle on se demande si le moteur tourne. Dans l'affirmative, on procède, dans une étape 114, à l'extinction de la source lumineuse. Dans la négative, l'organigramme passe à une étape de suivante de décision 115 dans laquelle on cherche à détecter de nouveau l'ouverture de la porte. Si une telle ouverture est détectée, l'organigramme est repris au niveau de l'état 110.

Parallèlement, depuis l'arrivée de la porte dans l'état 110, c'est-à-dire fermée et déverrouillée, et si aucune activité du moteur n'a été détectée et qu'aucune opération de porte n'a été détectée, un troisième compte à rebours CAR3 est activé dans une étape de décision 116 ; le troisième compte à rebours CAR3 est réglé sur une durée d'environ 30 secondes à partir de la détection de l'état 112. Si le troisième compte à rebours CAR3 arrive à son terme, on procède, dans l'étape 914, à l'extinction de la source lumineuse. Tant que le troisième compte à rebours CAR3 n'est pas arrivé à son terme, on procède, dans une étape de décision 137, à la détection d'une opération de verrouillage, au moyen de l'identifiant ou par une pression au niveau de la poignée.

Si une telle opération de verrouillage est détectée, on retourne à la situation initiale 100, dans laquelle la porte est fermée et verrouillée. L'extinction de la source lumineuse sera alors effective dès que l'identifiant quittera la zone de détection du véhicule. Si aucune opération de verrouillage n'est détectée, l'organigramme est alors repris à l'étape de décision 107 dans laquelle une opération d'ouverture de porte est attendue. Ainsi, même si l'identifiant n'est plus dans la zone de détection, tant que l'opération de verrouillage de la porte n'a pas été réalisée, l'extinction de la source lumineuse n'est pas observée.

## Revendications

1. Procédé de pilotage de sources lumineuses disposées au niveau de poignées extérieures d'un véhicule automobile **caractérisé en ce qu'**il comporte les différentes étapes consistant à :
- allumer (103) lesdites sources lumineuses suite à la détection d'un événement particulier (101) ;
- provoquer (102) l'extinction des sources lumineuses si les conditions primaires suivantes sont réunies :
- sortie d'un identifiant associé au véhicule en dehors d'une zone de détection ;
- détection (117) d'un état verrouillé du véhicule.

2. Procédé selon la revendication précédente **caractérisé en ce qu'**il comporte l'étape supplémentaire consistant à, suite à l'étape (103) d'allumage des sources lumineuses, provoquer l'extinction forcée des sources lumineuses si, à l'issue d'un premier compte à rebours (CAR1), aucune opération de déverrouillage d'au moins une porte n'a été effectuée.

3. Procédé selon la revendication précédente **caractérisé en ce que** le premier compte à rebours (CAR1) a une durée comprise entre 10 et 20 secondes, notamment 15 secondes.

4. Procédé selon l'une au moins des revendications précédentes **caractérisé en ce qu'**il comporte l'étape supplémentaire consistant à, suite à l'étape (103) d'allumage des sources lumineuses, provoquer l'extinction forcée des sources lumineuses si un état actif du moteur est détecté (113).

5. Procédé selon l'une au moins des revendications précédentes **caractérisé en ce qu'**il comporte l'étape supplémentaire consistant à, suite à l'étape (103) d'allumage des sources lumineuses, provoquer l'extinction forcée des sources lumineuses si, à l'issue d'un deuxième compte à rebours (CAR2), aucune opération d'ouverture (107) de porte n'a été détectée.

6. Procédé selon la revendication précédente **caractérisé en ce que** le deuxième compte à rebours (CAR2) a une durée comprise entre 20 et 40 secondes, notamment 30 secondes.

7. Procédé selon l'une au moins des revendications précédentes **caractérisé en ce que** l'événement particulier (101) provoquant l'allumage des sources lumineuses consiste en la détection dans la zone de détection de la présence de l'identifiant associé au véhicule.

8. Véhicule automobile **caractérisé en ce qu'**il est apte à mettre en oeuvre le procédé selon l'une au moins des revendications précédentes.
